# EUROPEAN PATENT APPLICATION

(11) **EP 2 415 589 A2**
(43) Date of publication of application: **08.02.2012**
(21) Application number: 11176390.0
(22) Date of filing: 03.08.2011
(51) Int. Cl.: B29D 22/02, B29C 49/30, B29C 49/56

(54) **Air bellow press machine operable on vertical and horizontal planes**

(30) Priority: 03.08.2010 TR 201006410
(71) Applicant: HSS Otomotiv VE Lastik Sanayi Anonim Sirketi, Bursa (TR)
(72) Inventor: Demir, Necdet, BURSA (TR); Ciftci, Mahmut, Bursa (TR)
(74) Representative: Iskender, Ibrahim

(57) **Abstract**

The present invention relates to an air bellow press machine, comprising an upper mold (50) and a lower mold (51) to shape an air bellow, and squeeze heads (40) to close two open areas of said molds (50, 51) to conduct a vulcanization process, comprising an upper mold (50) at a fixed position, squeeze heads (40) and a lower mold (51) moved linearly by means of horizontal push elements (20) positioned on a movable table (90), a vertical push element (30) moved on the a-direction together with said squeeze heads (40) and the lower mold (51), bearing rods (70) and bearing elements (80) providing a vertical guide to the movable table (90) whereon said squeeze heads (40) and the lower mold (51) are positioned.

## Description

### Field of Invention

The present invention relates to an air bellow press, which provides the vulcanization of convoluted air springs, as one of the air suspension systems, without using a vulcanization bladder, and allows to give the final shape of a product.

This invention relates to an air bellow press, comprising an upper mold and a lower mold to shape an air bellow, and squeeze heads to close two open areas of said molds to conduct a vulcanization process, comprising an upper mold at a fixed position, squeeze heads moved linearly by means of horizontal push elements positioned on a movable table, a vertical push element moved on the a-direction together with said squeeze heads and the lower mold, bearing rods and bearing elements providing a vertical guide to the movable table whereon said squeeze heads and the lower mold are positioned.

### Prior Art

The vulcanization process in the production of convoluted air springs is realized by supplying air into the product as it is positioned horizontally. This process, which requires a long production time, cannot ensure complete vulcanization, and since it is not possible to use high pressure, repair and retouch frequency is increased. Rubber cannot be distributed uniformly in the air bellow which is vulcanized in a horizontal position, and this fact causes the generation of relatively thicker layer at the lower sections, and a relatively thinner layer at the upper sections. Therefore wears and tears occur. These causes, leading to the loss of time and material, raise the costs accordingly. Or they are vulcanized in vertical molds by conducting a pre-shaping process. This, however, leads to losses both in quality, and in labor. The amount of waste is also increased.

In prior art systems, since the vulcanization process is carried out by positioning vertically as the system is positioned horizontally, it occupies a relatively larger area because of its design. Since the positioning step is similarly conduced in an axial fashion, it is additionally driven by means of an electric motor, thereby increasing the consumption of electricity. Since the system according to the prior art makes a rotational movement, more wear and fatigue occur on the components of the machine.

In a relevant search made against the database of the Turkish Patent Office is found for instance the application TR2009/01565 filed on 2009/03/03. In the abstract of that application is disclosed a mold mechanism, operating in an integrated manner to the vulcanization molds conducting the vulcanization process of elastomeric materials and particularly of suspension bellows mounted between the axles and the chassis of vehicles to absorb the impacts, as well as a method, providing the vulcanization of the air bellow without using a cylindrical elastomeric bladder.

Another application is TR2009/01566 filed on 2009/03/03. According to the abstract of that patent application, that invention relates to a vulcanization press, conducting the vulcanization process of elastomeric materials and particularly of the suspension bellows used in the automotive sector, and comprising a movable lower mold group, positioned at the upper section of a lower table with a fixed structure, an upper mold group, in connection with a movable upper table which is movable up and downward by means of the drive it receives from drive means, and a mold body, which is disposed at the upper section of the lower mold group, and of which the inner section is supplied with an elastomeric material to be vulcanized, where the lower mold group is angularly moved relative to the lower table with an immovable structure by means of drive means.

In the patent application US4871305, in turn, is disclosed a tire vulcanizing machine with devices for collecting and unloading the tire being treated, this machine comprising an element for moving the tire and a mold with several segments carrying mold sections that can move radially - the top section of the mold is held by said element, which can move axially and angularly, wherein the element comprises devices which engage the upper rim of said tire on the top section of the mold in the collection position. There are also provided devices for centering said rim with respect to the top section of the mold.

### Description of Invention

The object of this invention is to provide an air bellow press, which as differing from the air bellow presses according to the prior art, has a configuration with the operation potential on vertical and horizontal axes, wherein vertical and horizontal drive is supplied to the lower and upper molds according to different variation techniques and wherein the squeeze heads and molds are moved or kept immovable as preferred.

According to an object of this invention, it is more rigid and strong as compared to the press machines according to the prior art. The mold components according to this system are heated with steam; and air, nitrogen, or stem is supplied as the vulcanization gas into the mold.

According to an object of this invention, it has a more simple mechanic structure as compared to other press machines, since the roll is positioned horizontally and is similarly vulcanized in a horizontal manner.

According to another object of this invention, different production variations are applicable thanks to its specifically-designed body. Put differently, the lower mold is moved by means of a drive element (a piston) provided that only the lower mold is movable and the upper mold is immovable, and the upward motion of the lower mold and the head squeeze components is provided by means of cylindrically-structured bearing elements.

According to another object of this invention, different production variations are applicable thanks to its specifically-designed body. That means, both the lower and upper molds have a movable structure and separate pistons are applied to each mold.

According to another object of this invention, different production variations are applicable thanks to its specifically-designed body. That means, likewise both the lower and upper molds have movable structures, but a vertical linear motion is provided by means of track/slide bearing elements without requiring the use of any cylindrically-structured bearing elements (guiding elements).

According to another object of this invention, different production variations are applicable thanks to its specifically-designed body. That means, both the lower and upper molds are positioned on the horizontal axis, but not on the vertical one, and both have movable structures, but a horizontal linear motion is provided by means of track/slide bearing elements without requiring the use of any cylindrically-structured bearing elements (guiding elements).

According to another object of this invention, both the lower and upper molds are positioned on the horizontal axis, but not on the vertical one, and one of them has a movable structure, but a horizontal linear motion is provided by means of track/slide bearing elements without requiring the use of any cylindrically-structured bearing elements (guiding elements).

### Brief Description of Drawings

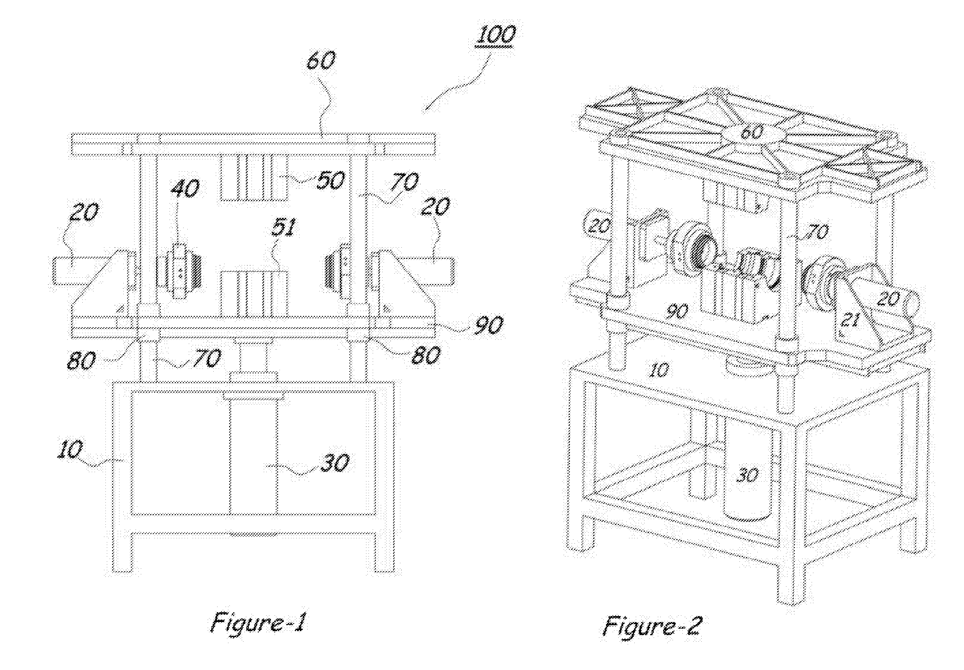

Figure 1 is a two-dimensional illustration from the front of the air bellow press according to the present invention, wherein the squeeze heads are positioned on the horizontal axis, the lower and upper molds are positioned on the vertical axis, but the upper mold is immovable, and the lower mold is movable, and is supported by means of a single piston and cylindrical bearing element.
Figure 2 is a three-dimensional illustration from a different angle of the air bellow press according to the present invention, wherein the upper mold is immovable, the lower mold is movable, and is supported by means of a single piston and cylindrical bearing element.

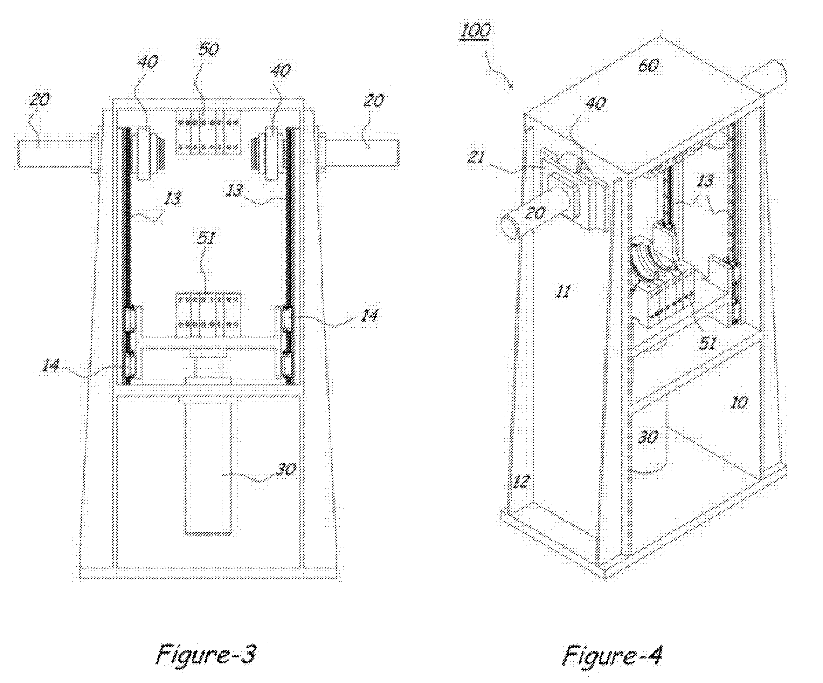

Figure 3 is a two-dimensional illustration from the front of the air bellow press according to the present invention, wherein the squeeze heads are positioned on the horizontal axis, the lower and upper molds are positioned on the vertical axis, but the upper mold is immovable, and the lower mold is movable, and is supported by means of a single piston and track/slide mechanism.
Figure 4 is a three-dimensional illustration from a different angle of the air bellow press according to the present invention, wherein the upper mold is immovable, the lower mold is movable, and is supported by a single piston and track/slide mechanism.

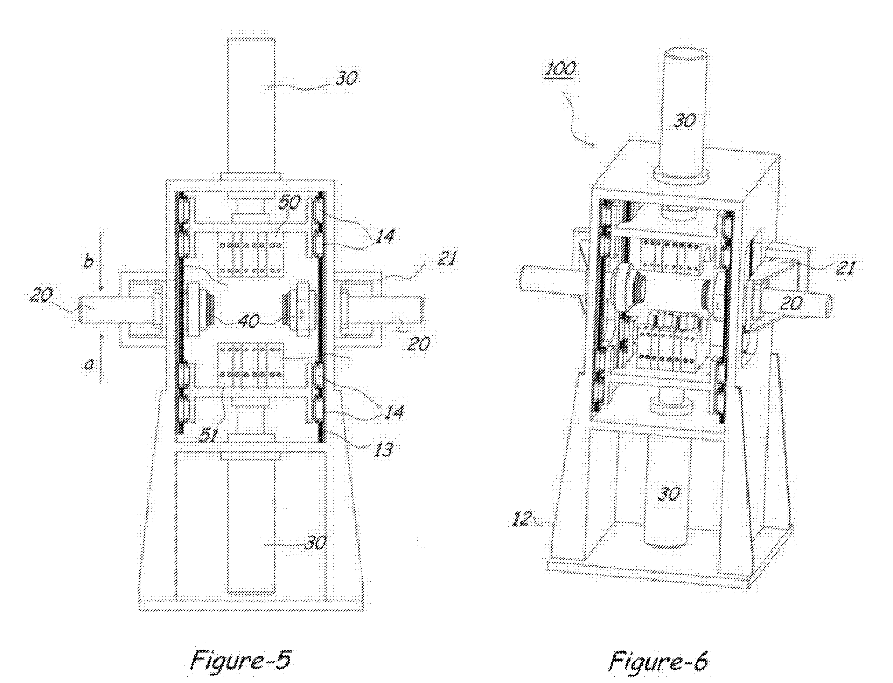

Figure 5 is a two-dimensional illustration from the front of the air bellow press according to the present invention, wherein the squeeze heads are positioned on the horizontal axis, the lower and upper molds are positioned on the vertical axis, but both the lower and upper molds are movable and operated by a double-piston effect and advanced by means of a track/slide mechanism.
Figure 6 is a general perspective illustration of the air bellow press according to the present invention, wherein the squeeze heads are positioned on the horizontal axis, the lower and upper molds are positioned on the vertical axis, but both the lower and upper molds are movable and operated by means of a double-piston effect and advanced by means of a track/slide mechanism.

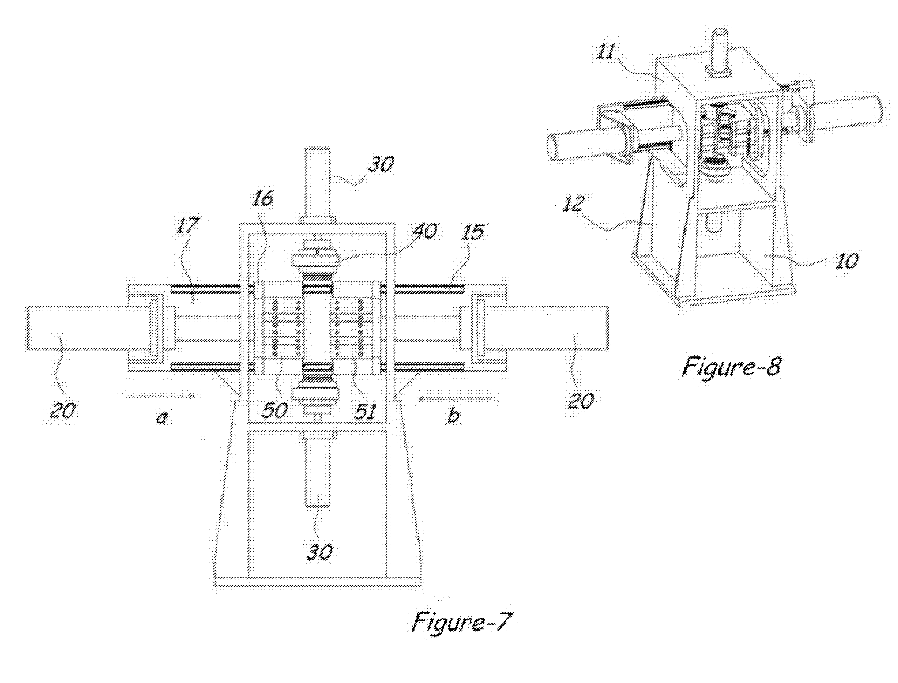

Figure 7 is a two-dimensional illustration from the front of the air bellow press according to the present invention, wherein the squeeze heads are positioned on the vertical axis, the lower and upper molds are positioned on the horizontal axis, but both the lower and upper molds are movable and operated by a means of double-piston effect and advanced by means of a track/slide mechanism.
Figure 8 is a general perspective illustration of the air bellow press according to the present invention, operated by means of a double-piston effect and advanced by means of a track/slide mechanism.

### List of Reference Numbers

- carrier frame: (10)
- carrier lateral surfaces: (11)
- frame ribs: (12)
- vertical tracks: (13)
- vertical slides: (14)
- horizontal slides: (15)
- horizontal tracks: (16)
- horizontal slide body: (17)
- horizontal push element: (20)
- mounting element: (21)
- vertical push element: (30)
- squeeze heads: (40)
- upper mold: (50)
- lower mold: (51)
- upper table: (60)
- bearing rods: (70)
- bearing elements: (80)

- movable table: (90)
- air bellow press machine: (100)

### Detailed Description of Invention

As illustrated in figures 1 and 2, the inventive structure comprises an immovable upper mold (50), a lower mold (51) and squeeze heads (40) moved linearly by means of horizontal push elements (20) positioned on a movable table (90), a vertical push element (30) moved on the a-direction together with said squeeze heads (40) and the lower mold (51), bearing rods (70) and bearing elements (80) guiding the movable table (90), onto which said squeeze heads (40) and the lower mold (51) are positioned, on a vertical direction.

In this design is made mention on a model, which is based on the logic of giving the drive from a single region with an upper table (60) placed onto the carrier frame (10) and the upper mold (50) fixed to this upper table (60). This structure, which is a different variation and/or alternative of the air bellow press machine (100), the lower mold (51) and the squeeze heads (40) are advanced on the a-direction by means of a vertical push element (30), and the vulcanization process is conducted once matching is completed with the upper mold (50). According to this variation, the lower mold (51) and the squeeze heads (40) are positioned on the movable table (90), and are guided in a vertical linear movement together with the movable table (90) by means of bearing rods (70) and bearing elements (80).

In figures 3 and 4, in turn, are illustrated immovable squeeze heads (40) fixed onto said carrier lateral surfaces (11), a movable lower mold (51) pushing at least one of the molds (50, 51) by means of the push element (30), vertical tracks (13) providing the linear movement of said lower mold (51) on the a-direction, and vertical slides (14) connected to the lower mold (51). In this variation of the present invention, one of the molds is kept immovable so that, for instance, the upper mold (50) is fixed onto the upper surface of the carrier frame (10). Again in this variation, the squeeze heads (40) are similarly held in a fixed position, whereas the lower mold (51) is pushed by means of a push element (30), i.e. a piston, and brought to the x-axis and the vulcanization process is conducted accordingly.

In figures 5 and 6, in turn, are illustrated a carrier frame (10) having carrier lateral surfaces (11) and immovable squeeze heads (40) fixed onto these carrier lateral surfaces (11), a movable upper mold (50) and lower mold (51) pushed by means of vertical push elements (30) from the upper and lower region, vertical tracks (13) providing the linear movement of said molds (50, 51) on the directions a and b, and vertical slides (14) connected to the molds (50, 51). In this alternative embodiment, the squeeze heads (40) are held in a fixed position and the molds (51) moved by means of push elements (30) from the lower and upper region are brought to the operation axis and the vulcanization process is conducted accordingly. In this model, both molds (50, 51) have a movable structure for which at least two vertical push elements (30) are used.

In figures 7 and 8 are illustrated squeeze heads (40) held in a fixed position on the vertical axis, and molds (50, 51) moved linearly by means of horizontal push elements (20) on the directions "a" and "b" by horizontal slides (15) and horizontal tracks (16) on the horizontal axis. In this alternative embodiment, the squeeze heads (40) are similarly fixed on the vertical axis, wherein the molds (50, 51) are moved linearly on the horizontal axis by means of horizontal push elements (20) and the squeeze heads (40) and molds (50, 51) are made to encounter at the operation axis such that the vulcanization process is performed. In this model, the horizontal slides (15) are positioned on the horizontal slide body (17).

Another variation comprises immovable squeeze heads (40) fixed onto said carrier lateral surfaces (11), a movable upper mold (50) pushing at least one of the molds (50, 51) by means of the push element (30), vertical tracks (13) providing the linear movement of said upper mold (50) on the b-direction, and vertical slides (14) connected to the upper mold (50).

Said carrier frame (10), in turn, comprises ribs (12) formed on the lateral surfaces (11) thereof, a horizontal slide body (17) which is formed on the lateral surfaces (11) thereof (10) and whereon said horizontal slides (15) are positioned, a mounting element (21), which is formed on said movable table (90) and onto which the horizontal push elements (20) are positioned, and an immovable upper table (60) whereon the upper mold (50) is placed when it has an immovable structure.

## Claims

1. An air bellow press machine (100), comprising an upper mold (50) and a lower mold (51) to shape an air bellow, and squeeze heads (40) to close two open areas of said molds (50, 51) to conduct a vulcanization process and it is **characterised in that**; it comprises, an upper mold (50) at a fixed position, squeeze heads (40) moved linearly on horizontal axis by means of horizontal push elements (20) positioned on a movable table (90), a vertical push element (30) moved on the a-direction on vertical axis together with said squeeze heads (40) and said lower mold (51), bearing rods (70) and bearing elements (80) providing a vertical guide to the movable table (90) whereon said squeeze heads (40) and the lower mold (51) are positioned.

2. The air bellow press machine according to Claim 1, and it is **characterised in that**; it comprises, a carrier frame (10) having carrier lateral surfaces (11) and immovable squeeze heads (40) fixed onto these carrier lateral surfaces (11), a movable upper mold (50) and lower mold (51) pushed by means of vertical push elements (30) from the upper and lower region, vertical tracks (13) providing the linear movement of said molds (50, 51) on the a- and b-directions, and vertical slides (14) connected to the molds (50, 51).

3. The air bellow press machine according to claims 1 and 2, and it is **characterised in that**;
it comprises, squeeze heads (40) held in a fixed position on the vertical axis, and molds (50, 51) moved linearly by means of horizontal push elements (20) on the a- and b-directions by horizontal slides (15) and horizontal tracks (16) on the horizontal axis.

4. The air bellow press machine according to claims 1, 2, and 3, and it is **characterised in that**; it comprises, immovable squeeze heads (40) fixed onto said carrier lateral surfaces (11), a movable lower mold (51) pushing at least one of the molds (50, 51) by means of the push element (30), vertical tracks (13) providing the linear movement of said lower mold (51) on the a-direction, and vertical slides (14) connected to the lower mold (51).

5. The air bellow press machine according to claims 1, 2, and 3, and it is **characterised in that**; it comprises, immovable squeeze heads (40) fixed onto said carrier lateral surfaces (11), a movable upper mold (50) pushing at least one of the molds (50, 51) by means of the push element (30), vertical tracks (13) providing the linear movement of said upper mold (50) on the b-direction, and vertical slides (14) connected to the upper mold (50).

6. The air bellow press machine according to any of the preceding claims, and it is **characterised in that**; it comprises, comprising carrier ribs (12) formed on the lateral surfaces (11) of said carrier frame (10).

7. The air bellow press machine according to any of the preceding claims, and it is **characterised in that**; it comprises, comprising horizontal slide body (17), which is formed on the lateral surfaces (11) of said carrier frame (10), and whereon said horizontal slides (15) are positioned.

8. The air bellow press machine according to any of the preceding claims, and it is **characterised in that**; it comprises, a mounting element (21), which is formed on said movable table (90) and onto which the horizontal push elements (20) are positioned.

9. The air bellow press machine according to any of the preceding claims, and it is **characterised in that**; it comprises, an immovable upper table (60) whereon the upper mold (50) is placed when it has an immovable structure.
